# EUROPEAN PATENT APPLICATION

(11) **EP 4 559 735 A1**
(43) Date of publication of application: **28.05.2025**
(21) Application number: 23939209.5
(22) Date of filing: 26.09.2023
(51) Int. Cl.: B60L 58/10, G01R 31/36, G06F 16/23

(54) **BATTERY DATA PROCESSING METHOD AND APPARATUS, AND ELECTRONIC DEVICE AND STORAGE MEDIUM**

(30) Priority: 26.05.2023 CN 202310607405
(71) Applicant: Deepal Automobile Technology Co., Ltd., Chongqing 401133 (CN)
(72) Inventor: LI, Dongjiang, Chongqing 401135 (CN); LI, Zonghua, Chongqing 401135 (CN); YU, Cheng, Chongqing 401135 (CN); YANG, Xu, Chongqing 401135 (CN); JIANG, Zhenwen, Chongqing 401135 (CN)
(74) Representative: 2K Patentanwälte Blasberg Kewitz & Reichel
(86) International application number: PCT/CN2023/121340
(87) International publication number: WO 2024/244235

(57) **Abstract**

A battery data processing method and apparatus, and an electronic device and a storage medium. The method comprises: acquiring an initial state parameter of a target vehicle battery, a vehicle state parameter, and the type of a data processing module, determining a target state parameter according to the initial state parameter, generating a target battery parameter set according to the target state parameter, the initial state parameter and the vehicle state parameter, then determining a data transmission mode on the basis of the type of the data processing module, transmitting the target battery parameter set on the basis of the data transmission mode, and on the basis of a preset calculation model and the target battery parameter set, determining a state parameter to be managed. In the method, a target state parameter is preliminarily calculated at a vehicle end, and is transmitted to an independent data processing module to perform refined calculation on the preliminarily calculated target state parameter, and the independent data processing module is not limited to computing-power-constrained hardware integrated in a head unit, and provides a state parameter to be managed that has high accuracy, such that the problem in the prior art of highly accurate data being not able to be provided for high-precision battery management can be solved.

## Description

### TECHNICAL FIELD

This application relates to the field of vehicle machine control, and in particular, to a battery data processing method and apparatus, and electronic device, and a storage medium.

### BACKGROUND

With development of electric vehicles, the importance of battery management systems is increasingly recognized. A battery serves as a core function part of an electric vehicle, and monitoring a related state of the battery and determining a battery management policy are crucial for enhancing a battery management capability. The battery management system, acting as the "brain" of a battery system, is responsible for identification, monitoring, control, and management of a battery state, and is essential for ensuring stable power output and safe usage of the battery system.

However, in an actual application process based on the battery management system, the battery management system is centrally integrated into vehicle-side hardware, and cannot provide high-accuracy data for performing high-precision battery management due to a limitation of computing power support of the vehicle-side hardware. In a related technology, CN115656843A (Power Battery SOC Determination Method And Device, Vehicle And Storage Medium) discloses an error correction for a SOC value based on battery current data, and the correction process is concentrated on correcting the SOC value on the vehicle side, and is still limited by computing power support of vehicle-side hardware. CN115932691A (Battery SOC Value Correction Method And Device, Computer Equipment And Storage Medium) discloses control for correcting a SOC value and confirming accuracy of the SOC value. In a control process, control may be performed based on a cloud, but calculation of a specific SOC value is still performed on the vehicle side.

### SUMMARY

An objective of the embodiments of the present invention is to provide a battery data processing method and apparatus, an electronic device, and a storage medium, so as to resolve a problem in the prior art that high-accuracy data cannot be provided for performing high-precision battery management.

The present invention provides a battery data processing method. The battery data processing method includes: obtaining an initial state parameter of a target vehicle battery, a vehicle state parameter, and a data processing module type that are collected by a data collection module, and sending the initial state parameter, the vehicle state parameter, and the data processing module type to a data management module; determining, by the data management module, a target state parameter based on the initial state parameter, and generating a target battery parameter set based on the target state parameter, the initial state parameter, and the vehicle state parameter; determining a data transmission manner based on the data processing module type, and sending the target battery parameter set to a data processing module based on the data transmission manner; and determining, by the data processing module, a to-be-managed state parameter based on a preset calculation model and the target battery parameter set to process battery data.

In an embodiment of the present invention, the data processing module type includes an in-domain data processing module and an outside-domain data processing module, the determining a data transmission manner based on the data processing module type, and sending the target battery parameter set to a data processing module based on the data transmission manner includes: if the data processing module type is an in-domain data processing module, determining that the data transmission manner is in-domain bus transmission, and sending the target battery parameter set to the data processing module based on in-domain bus transmission.

In an embodiment of the present invention, the determining a data transmission manner based on the data processing module type, and sending the target battery parameter set to a data processing module based on the data transmission manner includes: if the data processing module type is an outside-domain data processing module, determining that the data transmission manner is wireless transmission, and sending the target battery parameter set to the data processing module based on wireless transmission.

In an embodiment of the present invention, if the data processing module type is the outside-domain data processing module, the battery data processing method further includes: determining a type of the outside-domain data processing module, where the type of the outside-domain data processing module includes a single-vehicle outside-domain data processing module and a multi-vehicle outside-domain data processing module.

In an embodiment of the present invention, after the determining a type of the outside-domain data processing module, the battery data processing method further includes: if the type of the outside-domain data processing module is a multi-vehicle outside-domain data processing module, obtaining a vehicle identity information parameter of a target vehicle; annotating the target battery parameter set based on the vehicle identity information parameter, and sending the annotated target battery parameter set to the data processing module based on the data transmission manner; and determining, by the data processing module based on the preset calculation model and the annotated target battery parameter set, a to-be-managed state parameter with annotation.

In an embodiment of the present invention, after the determining, by the data processing module based on the preset calculation model and the annotated target battery parameter set, a to-be-managed state parameter with annotation, the battery data processing method includes: sending the to-be-managed state parameter with annotation to the data management module; determining, based on the to-be-managed state parameter with annotation, a target vehicle that has a mapping relationship with the to-be-managed state parameter with annotation; and sending, based on wireless transmission, the to-be-managed state parameter with annotation to a data management module of the target vehicle that has a mapping relationship with the to-be-managed state parameter with annotation.

In an embodiment of the present invention, after the determining, by the data processing module, a to-be-managed state parameter based on a preset calculation model and the target battery parameter set, the battery data processing method further includes: determining a current battery management policy through matching in a preset battery management policy set based on the target battery parameter set and the to-be-managed state parameter, to manage the battery according to the current battery management policy.

In an embodiment of the present invention, the target state parameter includes at least an initial remaining power parameter and an initial battery charging capacity parameter, and after the obtaining an initial state parameter of a target vehicle battery, a vehicle state parameter, and a data processing module type that are collected by a data collection module, and sending the initial state parameter, the vehicle state parameter, and the data processing module type to a data management module, the battery data processing method further includes: if the target state parameter is the initial remaining power parameter, determining, by the data management module, the initial remaining power parameter based on the initial state parameter, and generating a remaining power parameter set based on the initial remaining power parameter, the initial state parameter, and the vehicle state parameter; determining a data transmission manner based on the data processing module type, and sending the remaining power parameter set to the data processing module based on the data transmission manner; determining, by the data processing module, a to-be-managed remaining power parameter based on the preset calculation model and the remaining power parameter set; and sending the to-be-managed remaining power parameter to the data management module, and obtaining a current state parameter of an in-vehicle battery at a data receiving moment, to correct the to-be-managed remaining power parameter based on the initial remaining power parameter and the current state parameter, where the data receiving moment is a moment at which the to-be-managed remaining power parameter is received by the data management module.

In an embodiment of the present invention, the correcting the to-be-managed remaining power parameter based on the initial remaining power parameter and the current state parameter includes: determining a current remaining power parameter based on the current state parameter, and determining a remaining power parameter deviation based on the initial remaining power parameter and the current remaining power parameter; and correcting the to-be-managed remaining power parameter based on the remaining power parameter deviation to obtain an optimized to-be-managed remaining power parameter.

In an embodiment of the present invention, the sending the to-be-managed remaining power parameter to the data management module includes: if the data management module is a multi-vehicle outside-domain data processing module, determining, based on the to-be-managed remaining power parameter with annotation, a target vehicle that has a mapping relationship with the to-be-managed remaining power parameter with annotation; and sending, based on wireless transmission, the to-be-managed remaining power parameter with annotation to a data management module of the target vehicle that has a mapping relationship with the to-be-managed remaining power parameter with annotation.

In an embodiment of the present invention, after the obtaining an initial state parameter of a target vehicle battery, a vehicle state parameter, and a data processing module type that are collected by a data collection module, and sending the initial state parameter, the vehicle state parameter, and the data processing module type to a data management module, the battery data processing method further includes: if the target state parameter is the initial battery charging capacity parameter, determining, by the data management module, the initial battery charging capacity parameter based on the initial state parameter, and generating a charging capacity parameter set based on the initial battery charging capacity parameter and the initial state parameter; determining a data transmission manner based on the data processing module type, and sending the charging capacity parameter set to the data processing module based on the data transmission manner; determining, by the data processing module, a to-be-managed battery charging capacity parameter based on the preset calculation model and the charging capacity parameter set; and determining a current charging management policy through matching in a preset charging management policy set based on the second battery parameter set and the to-be-managed battery charging capacity parameter, to manage a charging current according to the current charging management policy.

An embodiment of the present invention further provides a battery data processing apparatus. The battery data processing apparatus includes: a data collection module, configured to: obtain an initial state parameter of a target vehicle battery, a vehicle state parameter, and a data processing module type that are collected by a data collection module, and send the initial state parameter, the vehicle state parameter, and the data processing module type to a data management module; the data management module, configured to: determine a target state parameter based on the initial state parameter, and generate a target battery parameter set based on the target state parameter, the initial state parameter, and the vehicle state parameter; a data transmission module, configured to: determine a data transmission manner based on the data processing module type, and send the target battery parameter set to a data processing module based on the data transmission manner; and a data processing module, configured to determine a to-be-managed state parameter based on a preset calculation model and the target battery parameter set to process battery data.

An embodiment of the present invention further provides an electronic device, including: one or more processors, and a storage apparatus, configured to store one or more programs. When the one or more programs are executed by the one or more processors, the electronic device is enabled to implement the battery data processing method according to any one of the foregoing embodiments.

An embodiment of the present invention further provides a computer-readable storage medium, on which computer-readable instructions are stored. When the computer-readable instructions are executed by a processor of a computer, the computer is enabled to perform the battery data processing method according to any one of the foregoing embodiments.

In the battery data processing method in the embodiments of the present invention, the initial state parameter of the target vehicle battery, the vehicle state parameter, and the data processing module type are obtained, the target state parameter is determined based on the initial state parameter, the target battery parameter set is generated based on the foregoing parameters, the data transmission manner is determined based on the foregoing data processing module type, the target battery parameter set is transmitted based on the foregoing data transmission manner, and the to-be-managed state parameter is determined based on the preset calculation model and the target battery parameter set. In this method, preliminary calculation of the target state parameter is performed on the vehicle side, and the target state parameter is transmitted to the independent data processing module to perform fine calculation on the target state parameter that has undergone preliminary calculation. In addition, the independent data processing module is not limited to computing power-limited hardware integrated in the vehicle machine, and provides a highly accurate to-be-managed state parameter, which can solve the problem that the existing technology cannot provide highly accurate data for high-precision battery management.

It should be understood that the foregoing general descriptions and the following detailed descriptions are merely examples and explanations, and cannot limit this application.

### BRIEF DESCRIPTION OF DRAWINGS

The accompanying drawings herein are incorporated in this specification, constitute a part of this specification, show embodiments in accordance with this application, and are used with this specification to explain a principle of this application. Clearly, the accompanying drawings in the following descriptions are merely some embodiments of this application. A person of ordinary skill in the art may still derive other drawings from these accompanying drawings without creative efforts. In the accompanying drawings:
FIG. 1 is a schematic diagram of an example system architecture according to an example embodiment of this application;
FIG. 2 is a flowchart of a battery data processing method according to an example embodiment of this application;
FIG. 3 is a schematic diagram of data exchange of a specific battery data processing method according to an example embodiment of this application;
FIG. 4 is a schematic diagram of data exchange of a specific single-vehicle in-domain battery data processing method according to an example embodiment of this application;
FIG. 5 is a schematic diagram of data exchange of a specific single-vehicle outside-domain battery data processing method according to an example embodiment of this application;
FIG. 6 is a schematic diagram of data exchange of a specific multi-vehicle outside-domain SOC processing method according to an example embodiment of this application;
FIG. 7 is a flowchart of a specific multi-vehicle outside-domain SOH processing method according to an example embodiment of this application;
FIG. 8 is a schematic diagram of a battery data processing apparatus according to an example embodiment of this application; and
FIG. 9 is a schematic diagram of a structure of a computer system of an electronic device according to an example embodiment of this application.

### DESCRIPTION OF EMBODIMENTS

The following describes implementations of the present invention with reference to accompanying drawings and specific embodiments. A person skilled in the art can easily understand other advantages and effects of the present invention based on content disclosed in this specification. The present invention may be further implemented or applied by using other different specific implementations. Various details in this specification may also be modified or altered based on different viewpoints and applications without departing from the essence of the present invention. It should be understood that the preferred embodiments are merely intended to describe the present invention, and are not intended to limit the protection scope of the present invention.

It should be noted that the drawings provided in the following embodiments merely describe the basic concept of the present invention by using examples. Although the drawings show only components related to the present invention, and are not drawn based on a quantity of components, a shape of a component, and a size of a component during actual implementation, a shape, a quantity, and a scale of the components may be arbitrarily changed during actual implementation, and a component layout form may be more complex.

In the following descriptions, a large quantity of details are discussed to provide a more thorough explanation of the embodiments of the present invention. However, it is clear to a person skilled in the art that the embodiments of the present invention may be implemented without these specific details. In other embodiments, well-known structures and devices are shown in a block diagram rather than in a detail form, to avoid making the embodiments of the present invention difficult to understand.

In this application, "and/or", which describes an association relationship between associated objects, indicates that there can be three types of relationships. For example, "A and/or B" can represent three cases: only A, A and B, and only B. The character "/" generally represents that involved associated objects are in an "or" relationship.

First, it should be noted that a BMS battery management system (BATTERY MANAGEMENT SYSTEM), commonly referred to as a battery babysitter or a battery keeper, is configured to: intelligently manage and maintain each battery unit, to prevent overcharge and overdischarge of the battery and prolong a battery life; monitor a battery status; be closely integrated with a power battery of an electric vehicle; perform real-time detection on a voltage, a current, and a temperature of the battery through a sensor; perform leakage detection, heat management, battery balance management, and alarm; calculate a state of charge (SOC) and a discharge power; report a state of health (SOH) and the state of charge (SOC); use an algorithm to control the maximum output power based on the voltage, the current, and the temperature of the battery to obtain a maximum travelling mileage; and use an algorithm to control a charger to charge with an optimal current, and communicate in real time with an in-vehicle master controller, a motor controller, an energy control system, an in-vehicle display system, and the like through a CAN bus interface.

State of Charge (SOC), also referred to as a remaining power level, is used to reflect a remaining capacity of the battery, and is defined as a ratio of the remaining capacity to a battery capacity. The SOC is the most important parameter in the BMS system. Without an accurate SOC, the BMS cannot work normally and the battery life cannot be prolonged. Higher estimation precision of the SOC indicates a higher endurance mileage for a battery of the same capacity. Therefore, high-precision SOC estimation can effectively reduce the required battery costs.

State of Health (SOH) refers to the capacity, health status, and performance condition of a battery. It is the ratio of a performance parameter after a period of battery use to a nominal parameter. A new battery delivered from the factory is 100%, and a completely scrapped battery is 0%. It is the ratio of the capacity released by the battery when the battery is discharged from a fully charged state at a specific rate to a cut-off voltage to a corresponding nominal capacity of the battery, and it can be simply understood as the battery's maximum capacity. An internal resistance of the battery is related to the SOH. A lower SOH indicates a larger internal resistance of a lithium battery. An internal resistance value of a battery can be indirectly calculated by detecting a voltage, a current, a temperature, and other data, and then an SOH can be calculated according to a relationship between the SOH and the internal resistance of the battery. However, the internal resistance of the battery does not change obviously when the SOH changes in a small range, and the resistance value changes greatly when the battery is severely aged. Therefore, in this method, when the SOH changes in a small range, a measurement error is relatively large.

A beneficial effect that may be further provided in this application includes: a data processing module is independently disposed, thereby avoiding a limitation that a traditional battery management system is integrated into vehicle-end hardware, so that the data processing module can be processed by a device with high computing power, and multiple requirements of in-domain and outside-domain may be set. In an outside-domain scenario, battery data of multiple vehicle ends may be controlled by a separate data processing module, thereby effectively reducing setting costs of the battery management system. Based on different scenario requirements, an in-domain single-vehicle battery management system may be disposed, or an outside-domain control battery management system may be disposed. In addition, the outside-domain battery control system may further include an outside-domain single-vehicle battery management system and an outside-domain multi-vehicle battery management system, so as to meet battery management requirements in multiple scenarios. When the battery control system is an outside-domain multi-vehicle battery management system, annotation is performed according to a vehicle identity information parameter, so as to facilitate data matching in data transmission. After the to-be-managed remaining power parameter is determined, numerical correction is performed on the to-be-managed remaining power parameter based on a deviation value between a current remaining power parameter and an initial remaining power as a correction value, so as to eliminate a parameter error caused by a data processing time difference to the to-be-managed remaining power parameter. The battery data processing method may further calculate and process a battery charging capacity parameter, to extend an applicable scope of this solution, improve a horizontal application scope of this solution, facilitate data processing of the battery management system, and reduce costs of data processing of the battery management system. A general architecture of the battery data processing method may improve a requirement for battery data management refinement, and may process and calculate battery data in multiple battery management policies, so as to improve the level of satisfaction for refined data management requirements.

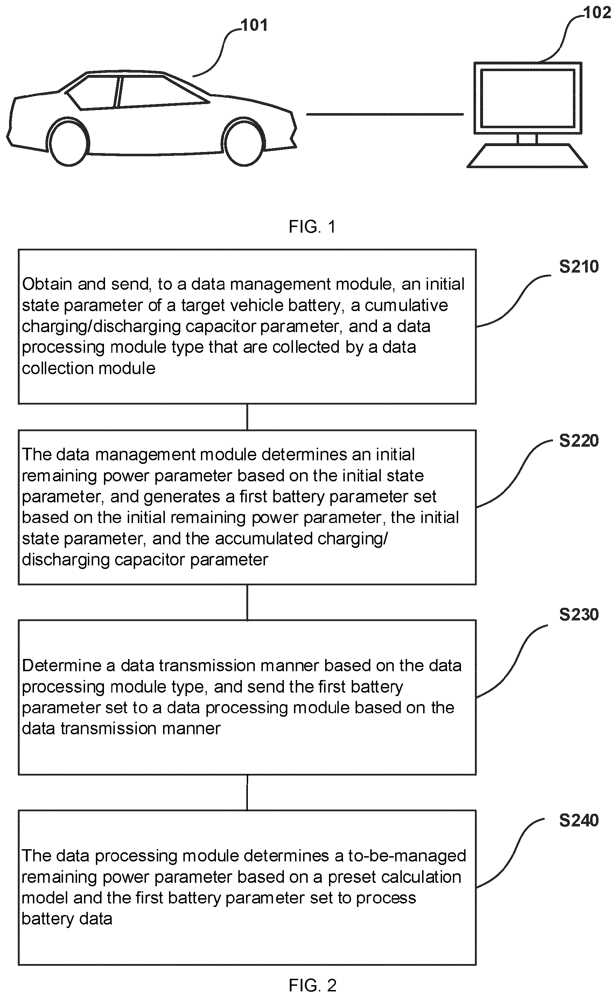

FIG. 1 is a schematic diagram of an example system architecture according to an example embodiment of this application.

Refer to FIG. 1. The system architecture may include a vehicle machine 101 and a computer device 102. The vehicle machine 101 is configured to obtain an initial state parameter of a target vehicle battery, a vehicle state parameter, and a data processing module type, and then provide the initial state parameter, the vehicle state parameter, and the data processing module type to the computer device 102 for processing. The computer device 102 may be at least one of a microcomputer, an embedded computer, a network computer, or the like. A person skilled in the art may use the computer device 102 to determine an initial remaining power parameter based on the initial state parameter, generate a target battery parameter set based on the initial remaining power parameter, the initial state parameter, and the vehicle state parameter, determine a data transmission manner based on the data processing module type, and send the target battery parameter set to a data processing module based on the data transmission manner. The data processing module determines a to-be-managed remaining power parameter based on a preset calculation model and the target battery parameter set, so as to process battery data.

In an example, after obtaining the initial state parameter of the battery of the vehicle machine 101, the vehicle state parameter, and the data processing module type, the computer device 102 determines the initial remaining power parameter based on the initial state parameter, generates the target battery parameter set based on the foregoing parameters, determines the data transmission manner based on the data processing module type, transmits the target battery parameter set based on the data transmission manner, and determines the to-be-managed remaining power parameter based on the preset calculation model and the target battery parameter set. In this method, preliminary calculation of the remaining power parameter is performed on the vehicle side, and the remaining power parameter is transmitted to the independent data processing module to perform fine calculation on the remaining power parameter that has undergone preliminary calculation. In addition, the independent data processing module is not limited to computing power-limited hardware integrated in the vehicle machine, and provides a highly accurate remaining power parameter, which can solve the problem that the existing technology cannot provide highly accurate data for high-precision battery management.

FIG. 2 is a flowchart of a battery data processing method according to an example embodiment of this application. The battery data processing method may be executed in the system architecture including the vehicle machine 101 and the computer device 102 shown in FIG. 1. Refer to FIG. 2. The flowchart of the battery data processing method includes at least step S210 to step S240. Details are described as follows:

In step S210, an initial state parameter of a target vehicle battery, a vehicle state parameter, and a data processing module type that are collected by a data collection module are obtained, and are sent to a data management module.

In an embodiment of this application, the foregoing initial state parameter of the target vehicle battery includes but is not limited to signal parameters such as a temperature, a voltage, a current, a pressure, and a cumulative charging/discharging capacity of the battery, and the vehicle state parameter includes parameters that are strongly correlated with a driving condition such as a vehicle travelling mileage and a current time.

In an embodiment of this application, the data processed by the data management module includes but is not limited to parameters such as an initial remaining power parameter, an initial battery charging capacity parameter, an ohmic internal resistance, and a polarization internal resistance.

In an embodiment of this application, determining the initial battery charging capacity parameter based on the initial state parameter may be determining the initial battery charging capacity parameter by using an ampere-hour integration method. In some other embodiments of this application, the initial battery charging capacity parameter may alternatively be determined according to another estimation method. A specific estimation method is not limited herein.

In step S220, the data management module determines a target state parameter based on the initial state parameter, and generates a target battery parameter set based on the target state parameter, the initial state parameter, and the vehicle state parameter.

In an embodiment of this application, the target state parameter includes but is not limited to parameters such as an initial remaining power parameter, an initial battery charging capacity parameter, an ohmic internal resistance, and a polarization internal resistance.

In an embodiment of this application, if the target state parameter is the initial remaining power parameter, the data management module determines the initial remaining power parameter based on the initial state parameter, generates the remaining power parameter set based on the initial remaining power parameter, the initial state parameter, and the vehicle state parameter, determines the data transmission manner based on the data processing module type, and sends the remaining power parameter set to the data processing module based on the data transmission manner, and then the data processing module determines the to-be-managed remaining power parameter based on the preset calculation model and the remaining power parameter set, sends the to-be-managed remaining power parameter to the data management module, and obtains a current state parameter of the in-vehicle battery at a data receiving moment, so as to correct the to-be-managed remaining power parameter based on the initial remaining power parameter and the current state parameter. The data receiving moment is a moment when the to-be-managed remaining power parameter is received by the data management module.

In an embodiment of this application, determining the initial remaining power parameter based on the initial state parameter is determining the initial remaining power parameter based on the ampere-hour integration method. In some other embodiments of this application, the initial remaining power parameter may alternatively be preliminarily determined according to another estimation method. A specific method for calculating the initial remaining power parameter is not limited herein.

In an embodiment of this application, a current remaining power parameter is determined based on the current state parameter, a remaining power parameter deviation is determined based on the initial remaining power parameter and the current remaining power parameter, and then the to-be-managed remaining power parameter is corrected based on the remaining power parameter deviation to obtain an optimized to-be-managed remaining power parameter.

If the data management module is a multi-vehicle outside-domain data processing module, a target vehicle that has a mapping relationship with the to-be-managed remaining power parameter with annotation is determined based on the to-be-managed remaining power parameter with annotation, and the to-be-managed remaining power parameter with annotation is sent, based on wireless transmission, to a data management module of the target vehicle that has a mapping relationship with the to-be-managed remaining power parameter with annotation.

If the target state parameter is the initial battery charging capacity parameter, the data management module determines the initial battery charging capacity parameter based on the initial state parameter, generates a charging capacity parameter set based on the initial battery charging capacity parameter and the initial state parameter, determines a data transmission manner based on the data processing module type, and sends the charging capacity parameter set to the data processing module based on the data transmission manner. The data processing module determines a to-be-managed battery charging capacity parameter based on the preset calculation model and the charging capacity parameter set, and then determines a current charging management policy through matching in the preset charging management policy set based on a second battery parameter set and the to-be-managed battery charging capacity parameter, so as to manage a charging current according to the current charging management policy.

In an embodiment of this application, the to-be-managed battery charging capacity parameter is determined based on the preset calculation model and the second battery parameter set. In this determining process, the foregoing to-be-managed battery charging capacity parameter may be determined based on a calculation method such as a capacity fade algorithm or an electrochemical model algorithm.

In step S230, a data transmission manner is determined based on the data processing module type, and the target battery parameter set is sent to the data processing module based on the data transmission manner.

In an embodiment of this application, the foregoing data transmission manner includes but is not limited to in-domain bus transmission and wireless transmission.

In an embodiment of this application, the foregoing data processing module type includes an in-domain data processing module and an outside-domain data processing module.

In an embodiment of this application, if the data processing module type is an in-domain data processing module, it is determined that the data transmission manner is in-domain bus transmission, and the target battery parameter set is sent to the data processing module based on in-domain bus transmission. In the embodiment of this application, the foregoing in-domain bus transmission includes bus transmission technologies such as LIN, CAN, FlexRay, and MOST. LIN (Local Interconnect Network) is a low-cost serial communication network oriented to a vehicle-side distributed application, and is used to implement distributed electronic system control in the vehicle. CAN is the abbreviation of Controller Area Network, and is the ISO international standard serial communication protocol. The FlexRay bus is designed for in-vehicle networking; it adopts a time-based trigger mechanism, and has features of high bandwidth and good fault tolerance; and it has advantages in real-time, reliability and flexibility. MOST (Media Oriented System Transport) is a media-oriented system transmission bus, which is a data bus technology developed for use in vehicles and used for multimedia applications.

In an embodiment of this application, if the data processing module type is an outside-domain data processing module, it is determined that the data transmission manner is wireless transmission, and the target battery parameter set is sent to the data processing module based on wireless transmission.

In an embodiment of this application, if the data processing module type is the outside-domain data processing module, the method further includes: determining a type of the outside-domain data processing module, where the type of the outside-domain data processing module includes a single-vehicle outside-domain data processing module and a multi-vehicle outside-domain data processing module.

In an embodiment of this application, if the type of the outside-domain data processing module is the multi-vehicle outside-domain data processing module, a vehicle identity information parameter of the target vehicle is obtained, the target battery parameter set is annotated based on the vehicle identity information parameter, and the annotated target battery parameter set is sent to the data processing module based on the data transmission manner. The data processing module determines, based on the preset calculation model and the annotated target battery parameter set, the to-be-managed remaining power parameter with annotation.

In an embodiment of this application, the vehicle identity information parameter may be a vehicle identity code, or may be an identification number used to distinguish a vehicle identity, such as a controller number, to form a label of the vehicle identity information parameter and annotate the target battery parameter set, so as to distinguish and confirm vehicle ownership information of the target battery parameter set.

In step S240, the data processing module determines a to-be-managed state parameter based on the preset calculation model and the target battery parameter set to process battery data.

In an embodiment of this application, the battery data processing method in this solution can specifically solve the battery management parameters such as a battery pack SOC, a battery pack SOH, a battery pack capacity, an SOC of each cell in the battery pack, an SOH of each cell in the battery pack, a capacity of each cell in the battery pack, an internal resistance of each cell in the battery pack, a temperature change trend of the battery pack, a self-discharge current of each cell, a short-circuit resistance in the cell, a polarization voltage of the cell, a power parameter of the battery pack, and a remaining charging time of the battery of the vehicle in this embodiment. That is, the to-be-managed state parameter in this embodiment may specifically include but is not limited to the foregoing battery management parameter data.

In an embodiment of this application, the to-be-managed state parameter is determined based on the preset calculation model and the target battery parameter set. The preset calculation model includes but is not limited to an electrochemical model algorithm, an internal resistance SOC calculation formula method, a fuzzy logic method, a fusion algorithm, a life prediction model, a performance model, an AI algorithm, machine learning, another mathematical algorithm, and the like. The fusion algorithm includes simple modification, weighting, Kalman filtering or extended Kalman filtering, a sliding mode variable structure, and the like. In this embodiment, the to-be-managed state parameter may be determined based on the electrochemical model, the internal resistance SOC calculation formula method, and the like. The calculation methods and models for the to-be-managed state parameter are merely examples. The preset calculation model may be determined according to a specific implementation, and is not specifically limited herein.

In an embodiment of this application, after determining the to-be-managed state parameter based on the preset calculation model and the target battery parameter set, the data processing module determines a current battery management policy through matching in a preset battery management policy set based on the target battery parameter set and the to-be-managed state parameter, so as to manage the battery according to the current battery management policy.

In an embodiment of this application, in a multi-vehicle integration architecture, data transmission between the data processing module and the data management module is performed through wireless transmission, and an obvious delay exists in this transmission condition. For the data delay problem, a remaining power parameter deviation may be determined by using the initial remaining power parameter and the current remaining power parameter, to perform data correction, so as to avoid impact of the delay problem on data accuracy.

In an embodiment of this application, if the data management module is a multi-vehicle outside-domain data processing module, the to-be-managed state parameter with annotation is sent to the data management module, a target vehicle that has a mapping relationship with the to-be-managed state parameter with annotation is determined according to the to-be-managed state parameter with annotation, and then the to-be-managed remaining power parameter with annotation is sent, based on wireless transmission, to a data management module of the target vehicle that has a mapping relationship with the to-be-managed remaining power parameter with annotation.

The following describes some embodiments of this application in specific environments. The embodiments may be specifically applied to the implementation environment shown in FIG. 1, or may be applicable to another example implementation environment, and are specifically configured in another device. This embodiment sets no limitation on an implementation environment to which the apparatus is applicable. It should be noted that, in the following specific embodiment, a data collection terminal is consistent with the data collection module in the foregoing embodiment, a management control terminal is consistent with the data management module in the foregoing embodiment, a data transmission terminal is consistent with the data transmission module in the foregoing embodiment, a data computation terminal is consistent with the data processing module in the foregoing embodiment, an SOC value is consistent with the remaining power parameter in the foregoing embodiment, and an SOH value is consistent with the battery charging capacity parameter in the foregoing embodiment.

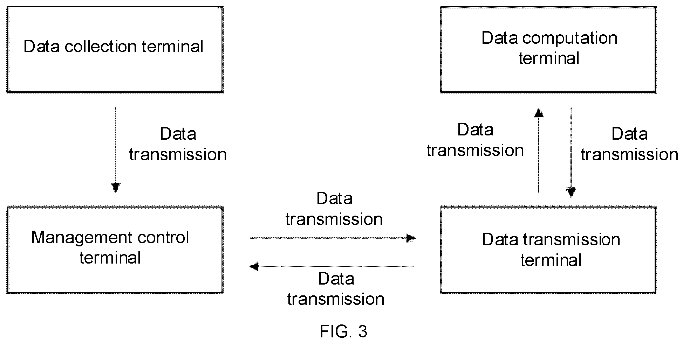

Refer to FIG. 3. FIG. 3 is a schematic diagram of data exchange of a specific battery data processing method according to an example embodiment of this application. The specific method may be applied to the implementation environment shown in FIG. 1, or may be applicable to another example implementation environment, and is specifically configured in another device. This embodiment sets no limitation on an implementation environment to which the apparatus is applicable.

As shown in FIG. 3, in a specific embodiment of this application, in the specific battery data processing method, data is exchanged among the data collection terminal, the management control terminal, the data transmission terminal, and the data computation terminal. The data collection terminal is deployed at a battery end and is configured to collect a real-time state parameter of the battery. The management control terminal may be deployed at the battery end or may be integrated with another controller of the vehicle, and is configured to implement basic computation of a battery state and battery management and control. The data transmission terminal is configured to implement data transmission between the management control terminal and the data computation terminal, and a deployment location of the data transmission terminal depends on a deployment status of the management control terminal. The data computation terminal may be deployed inside the vehicle and integrated with another processor, or may be separately deployed outside the vehicle, or may be integrated into a same server together with computation terminals of a plurality of vehicles.

In a specific embodiment of this application, the data collection terminal collects an initial state parameter of a target vehicle battery, a vehicle state parameter, and a data processing module type, and sends the initial state parameter, the vehicle state parameter, and the data processing module type to the management control terminal; and the management control terminal determines an initial remaining power parameter based on the initial state parameter, and generates a target battery parameter set based on the initial remaining power parameter, the initial state parameter, and the vehicle state parameter. Then, the target battery parameter set is transmitted to the data transmission terminal, a data transmission manner is determined based on the data processing module type, and the target battery parameter set is sent to the data computation terminal based on the data transmission manner.

In a specific embodiment of this application, the data computation terminal determines a to-be-managed remaining power parameter based on a preset calculation model and the target battery parameter set, to process battery data, determines a current battery management policy through matching in a preset battery management policy set based on the target battery parameter set and the to-be-managed remaining power parameter, and then transmits the to-be-managed remaining power parameter and the current battery management policy to the data transmission terminal according to the foregoing data transmission manner. The to-be-managed remaining power parameter and the current battery management policy are parsed based on a preset parsing manner and sent to the management control terminal, so as to perform battery management according to the to-be-managed remaining power parameter and the current battery management policy.

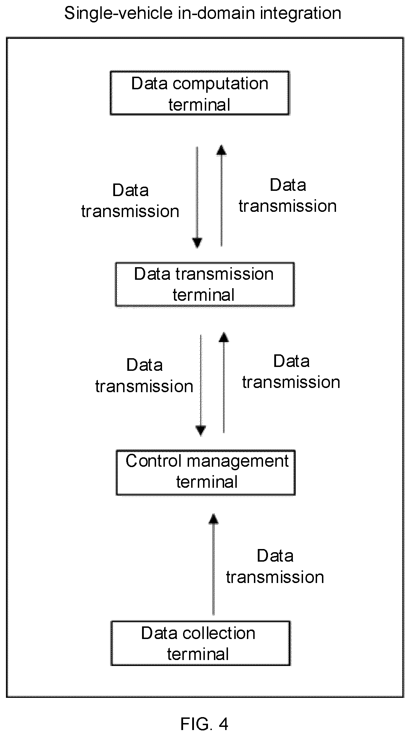

Refer to FIG. 4. FIG. 4 is a schematic diagram of data exchange of a specific single-vehicle in-domain battery data processing method according to an example embodiment of this application. The specific method may be applied to the implementation environment shown in FIG. 1, or may be applicable to another example implementation environment, and is specifically configured in another device. This embodiment sets no limitation on an implementation environment to which the apparatus is applicable.

As shown in FIG. 4, in a specific embodiment of this application, a data collection terminal collects a state parameter of a battery, including signals such as a temperature, a voltage, a current, and a pressure, and collected data is transmitted to a control management terminal by using a master-slave inter-board communication protocol. After receiving the data transmitted by the data collection terminal, the control management terminal performs preliminary computation, for example, calculates an SOC by using an ampere-hour integration method, and transmits the collected data and a data upload flag bit to a data transmission terminal by using a CAN protocol. After receiving the data transmitted by the control management terminal, the data transmission terminal transmits the data to a data computation terminal by using an intranet CAN. After receiving the data transmitted by the data transmission terminal, the data computation terminal performs computation based on a battery model and an algorithm to obtain a battery state parameter, formulates a corresponding control management policy according to the battery state parameter, and transmits the battery state parameter, the control management policy, and the like to the data transmission terminal. After receiving the data transmitted by the data computation terminal, the data transmission terminal parses and forwards the data to the control management terminal, and after receiving a computation result forwarded by the data transmission terminal, the control management terminal performs processing and execution according to a preset corresponding policy.

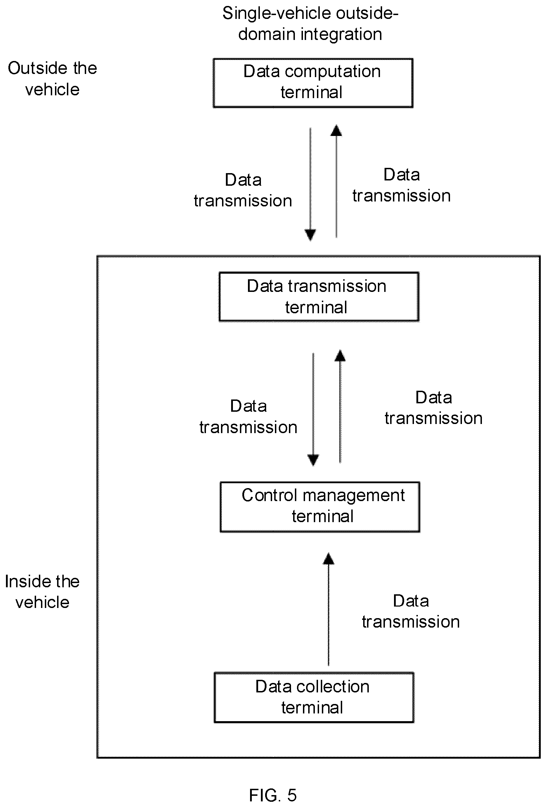

Refer to FIG. 5. FIG. 5 is a schematic diagram of data exchange of a specific single-vehicle outside-domain battery data processing method according to an example embodiment of this application. The specific method may be applied to the implementation environment shown in FIG. 1, or may be applicable to another example implementation environment, and is specifically configured in another device. This embodiment sets no limitation on an implementation environment to which the apparatus is applicable.

As shown in FIG. 5, in a specific embodiment of this application, a data collection terminal collects a real-time state parameter of a battery, including signals such as a temperature, a voltage, a current, and a pressure, and data is transmitted to a control management terminal by using a master-slave inter-board communication protocol. The data transmitted by the data collection terminal is received, and basic computation is performed, for example, calculating an SOC by using an ampere-hour integration method. When data is transmitted from the control management terminal to the data transmission terminal, several parameters that are strongly correlated with time and a driving condition are added for uploading together, and the parameter is denoted as q1 (for example, q1 may be a battery cumulative charge/discharge capacity, a vehicle travelling mileage, or the like). After receiving the data transmitted by the control management terminal, the data transmission terminal transmits the data to a data computation terminal in a wireless or wired transmission manner. After receiving the data transmitted by the data transmission terminal, the data computation terminal performs computation based on a battery model and an algorithm to obtain a battery state parameter F1 and the like, formulates a corresponding control management policy according to the battery state parameter F1, and simultaneously transmits the battery state parameter F1, the control management policy, and the marking parameter q1 to the data transmission terminal. The battery state parameter includes the to-be-managed remaining power parameter and/or the to-be-managed battery charging capacity parameter in the foregoing embodiment. After receiving the data transmitted by the data computation terminal, the data transmission terminal parses and forwards the data to the control management terminal. After receiving the computation result F1 and the marking parameter q1 that are forwarded by the data transmission terminal, the control management terminal compares q1 received by the control management terminal and the latest value q2 obtained through real-time calculation of the parameter, and corrects the received computation result F1 according to a difference between q1 and q2 to obtain a final battery state result F2. The received control management policy is processed and executed according to a corresponding policy preset by the control management terminal.

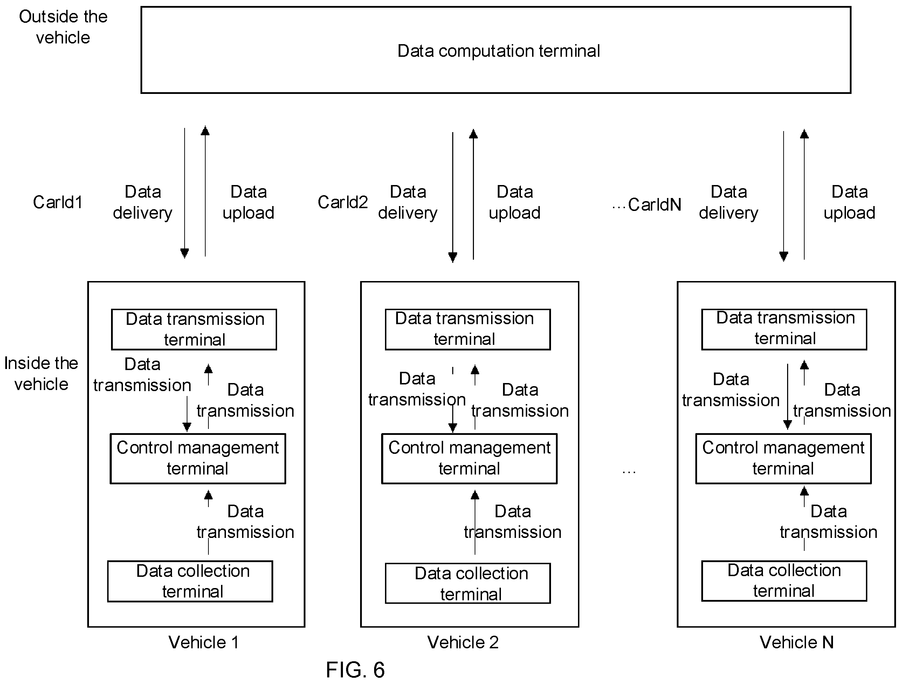

Refer to FIG. 6. FIG. 6 is a schematic diagram of data exchange of a specific multi-vehicle outside-domain SOC processing method according to an example embodiment of this application. The specific method may be applied to the implementation environment shown in FIG. 1, or may be applicable to another example implementation environment, and is specifically configured in another device. This embodiment sets no limitation on an implementation environment to which the apparatus is applicable.

As shown in FIG. 6, in a specific embodiment of this application, a data collection terminal collects a real-time state parameter of a battery, including signals such as a temperature, a voltage, a current, and a pressure, and data is transmitted to a control management terminal by using a master-slave inter-board communication protocol. After receiving the data transmitted by the data collection terminal, the control management terminal calculates an SOC value by using an ampere-hour integration method deployed in the data collection terminal, and records the SOC value as BCUSOC. The data such as the voltage, the current, and the temperature is transmitted from the control management terminal to the data transmission terminal, and an accumulated charge/discharge capacity value is uploaded together. The marking parameter is denoted as QaccAh.

In a specific embodiment of this application, after receiving the data transmitted by the control management terminal, the data transmission terminal transmits the data to a data computation terminal in a wireless transmission manner. After receiving the data transmitted by the data transmission terminal, the data computation terminal performs computation based on an electrochemical model to obtain an accurate SOC value of the battery, which is denoted as CloudSOC. CloudSOC and QaccAh are sent to the data transmission terminal simultaneously. When the data is sent to the data transmission terminal, an ID of each vehicle needs to be identified, so as to ensure that a result calculated by the data computation terminal matches a corresponding vehicle.

In a specific embodiment of this application, after receiving CloudSOC and QaccAh, the data transmission terminal parses and forwards CloudSOC and QaccAh to the control management terminal. It should be noted that in this case, a value of QaccAh is a value at a data uploading moment. After receiving CloudSOC and the marking parameter QaccAh, the control management terminal analyzes whether the value of QaccAh at a data receiving moment changes. If the value of QaccAh (t1) at the data receiving moment changes compared with the value of QaccAh (t0) at the data uploading moment, there is a need to correct CloudSOC (denoted as F1) according to a difference between the values of QaccAh at the two moments, and a corrected CloudSOC value is denoted as F2.

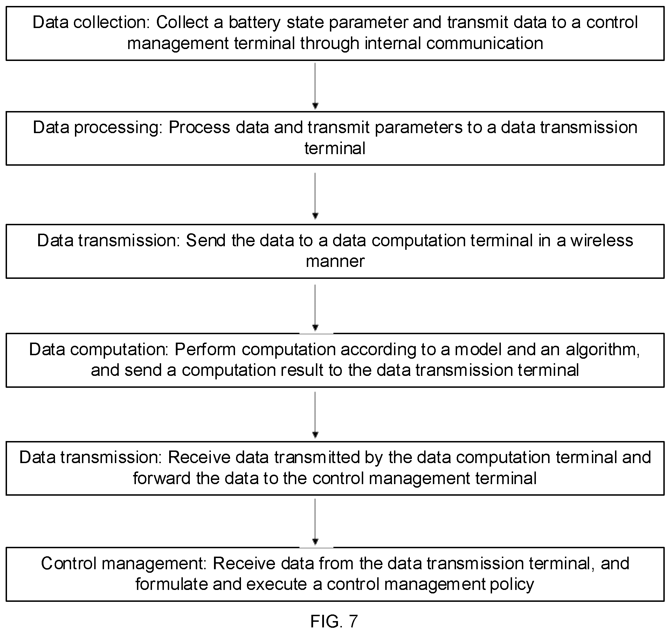

Refer to FIG. 7. FIG. 7 is a flowchart of a specific multi-vehicle outside-domain SOH processing method according to an example embodiment of this application. The specific method may be applied to the implementation environment shown in FIG. 1, or may be applicable to another example implementation environment, and is specifically configured in another device. This embodiment sets no limitation on an implementation environment to which the apparatus is applicable.

As shown in FIG. 7, in a specific embodiment of this application, a data collection terminal collects a state parameter of a battery, including signals such as a temperature, a voltage, a current, and a pressure, and data is transmitted to a control management terminal by using a master-slave inter-board communication protocol. The data transmitted by the data collection terminal is received, and a battery charging capacity Qch is calculated by using an ampere-hour integration method deployed in the control management terminal. The data such as Qch, the voltage, the current, and the temperature is transmitted from the control management terminal to a data transmission terminal.

In a specific embodiment of this application, after receiving the data transmitted by the control management terminal, the data transmission terminal transmits the data to a data computation terminal in a wireless transmission manner. After receiving the data, the data computation terminal performs computation based on an electrochemical model to obtain an accurate SOH value of the battery, which is denoted as CloudSOH. A charging control policy is formulated according to the CloudSOH value, that is, a current value of a charging MAP table is multiplied by CloudSOH, and an obtained new table is re-delivered to the data transmission terminal. An ID of each vehicle needs to be identified, so as to ensure that a result calculated by the data computation terminal matches a corresponding vehicle.

In a specific embodiment of this application, after receiving the updated charging MAP table, the data transmission terminal parses and forwards the updated charging MAP table to the control management terminal, and the control management terminal controls a charging current after receiving the updated charging MAP table.

In the battery data processing method in the embodiments of the present invention, the initial state parameter of the target vehicle battery, the vehicle state parameter, and the data processing module type are obtained, the target state parameter is determined based on the initial state parameter, the target battery parameter set is generated based on the foregoing parameters, the data transmission manner is determined based on the foregoing data processing module type, the target battery parameter set is transmitted based on the foregoing data transmission manner, and the to-be-managed state parameter is determined based on the preset calculation model and the target battery parameter set. In this method, preliminary calculation of the target state parameter is performed on the vehicle side, and the target state parameter is transmitted to the independent data processing module to perform fine calculation on the target state parameter that has undergone preliminary calculation. In addition, the independent data processing module is not limited to computing power-limited hardware integrated in the vehicle machine, and provides a highly accurate to-be-managed state parameter, which can solve the problem that the existing technology cannot provide highly accurate data for high-precision battery management. A beneficial effect that may be further provided in this application includes: the data processing module is independently disposed, thereby avoiding a limitation that a traditional battery management system is integrated into vehicle-end hardware, so that the data processing module can be processed by a device with high computing power, and multiple in-domain and outside-domain requirements may be set. In an outside-domain scenario, battery data of multiple vehicle ends may be controlled by a separate data processing module, thereby effectively reducing setting costs of the battery management system. Based on different scenario requirements, an in-domain single-vehicle battery management system may be disposed, or an outside-domain control battery management system may be disposed. In addition, the outside-domain battery control system may further include an outside-domain single-vehicle battery management system and an outside-domain multi-vehicle battery management system, so as to meet battery management requirements in multiple scenarios. When the battery control system is an outside-domain multi-vehicle battery management system, annotation is performed according to a vehicle identity information parameter, so as to facilitate data matching in data transmission. After the to-be-managed remaining power parameter is determined, numerical correction is performed on the to-be-managed remaining power parameter based on a deviation value between a current remaining power parameter and an initial remaining power as a correction value, so as to eliminate a parameter error caused by a data processing time difference to the to-be-managed remaining power parameter. The battery data processing method may further calculate and process a battery charging capacity parameter, to extend an applicable scope of this solution, improve a horizontal application scope of this solution, facilitate data processing of the battery management system, and reduce costs of data processing of the battery management system. A general architecture of the battery data processing method may improve a requirement for battery data management refinement, and may process and calculate battery data in multiple battery management policies, so as to improve the level of satisfaction for refined data management requirements.

The following describes apparatus embodiments of this application, and the apparatus may be configured to execute the battery data processing method in the foregoing embodiments of this application. For details not disclosed in the apparatus embodiments of this application, refer to the embodiments of the battery data processing method in this application.

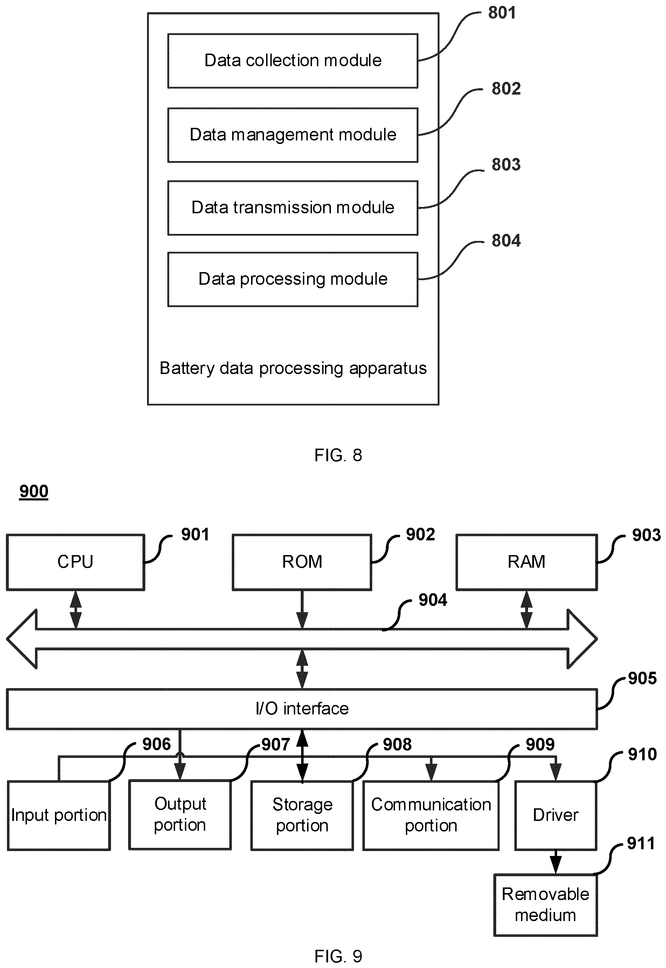

FIG. 8 is a schematic diagram of a battery data processing apparatus according to an example embodiment of this application. The apparatus may be applied to the implementation environment shown in FIG. 1. The apparatus may also be applicable to another example implementation environment, and is specifically configured in another device. This embodiment sets no limitation on an implementation environment to which the apparatus is applicable.

As shown in FIG. 8, the example battery data processing apparatus includes a data collection module 801, a data management module 802, a data transmission module 803, and a data processing module 804.

The data collection module 801 is configured to: obtain an initial state parameter of a target vehicle battery, a vehicle state parameter, and a data processing module type that are collected by the data collection module, and send the initial state parameter, the vehicle state parameter, and the data processing module type to the data management module. The data management module 802 is configured to: determine a target state parameter based on the initial state parameter, and generate a target battery parameter set based on the target state parameter, the initial state parameter, and the vehicle state parameter. The data transmission module 803 is configured to: determine a data transmission manner based on the data processing module type, and send the target battery parameter set to the data processing module based on the data transmission manner. The data processing module 804 is configured to determine a to-be-managed state parameter based on a preset calculation model and the target battery parameter set, to process battery data.

An embodiment of this application further provides an electronic device, including: one or more processors; and a storage apparatus, configured to store one or more programs. When the one or more programs are executed by the one or more processors, the electronic device is enabled to implement the battery data processing method provided in the foregoing embodiments.

FIG. 9 is a schematic diagram of a structure of a computer system of an electronic device according to an example embodiment of this application. It should be noted that the computer system 900 of the electronic device shown in FIG. 9 is merely an example, and should not impose any limitation on a function and a use range of the embodiments of this application.

As shown in FIG. 9, the computer system 900 includes a central processing unit (CPU) 901, which may perform various proper actions and processing according to a program stored in a read-only memory (ROM) 902 or a program loaded from a storage portion into a random access memory (RAM) 903, for example, perform the method in the foregoing embodiment. The RAM 903 further stores various programs and data required for a system operation. The CPU 901, the ROM 902, and the RAM 903 are connected to each other through a bus. An input/output (I/O) interface 905 is also connected to the bus 904.

The following portions are connected to the I/O interface 905: an input portion 906 including a keyboard, a mouse, and the like; an output portion 907 including a cathode ray tube (CRT) or a liquid crystal display (LCD), a speaker, and the like; a storage portion 908 including a hard disk and the like; and a communication portion 909 including a network interface card such as a local area network (LAN) card and a modem. The communication portion performs communication processing via a network such as the Internet. A driver is also connected to the I/O interface 905 as required. A removable medium 911 such as a magnetic disk, an optical disc, a magneto-optical disc, or a semiconductor memory is mounted on the driver 910 according to a requirement, so that a computer program read from the removable medium is installed into the storage portion 908 according to a requirement.

In particular, according to the embodiments of this application, a process described above with reference to the flowchart may be implemented as a computer software program. For example, embodiments of this application include a computer program product, where the computer program product includes a computer program carried on a computer-readable medium, and the computer program includes a computer program used to perform the method shown in the flowchart. In such an embodiment, the computer program may be downloaded and installed from a network through the communication portion 909, and/or installed from the removable medium 911. When the computer program is executed by the central processing unit (CPU) 901, various functions defined in the system of this application are executed.

It should be noted that the computer-readable medium described in the embodiments of this application may be a computer-readable signal medium, a computer-readable storage medium, or any combination thereof. The computer-readable storage medium may be, for example, an electrical system, apparatus, or device, a magnetic system, apparatus, or device, an optical system, apparatus, or device, an electromagnetic system, apparatus, or device, an infrared system, apparatus, or device, or a semiconductor system, apparatus, or device, or any combination thereof. A more specific example of the computer-readable storage medium may include but is not limited to an electrical connection having one or more wires, a portable computer disk, a hard disk, a random access memory (RAM), a read-only memory (ROM), an erasable programmable read-only memory (EPROM), a flash memory, an optical fiber, a portable compact disc read-only memory (CD-ROM), an optical storage device, a magnetic storage device, or any proper combination thereof. In this application, the computer-readable signal medium may include a data signal propagated in a baseband or as a part of a carrier, and carries a computer-readable computer program. The propagated data signal may be in a plurality of forms, including but not limited to an electromagnetic signal, an optical signal, or any suitable combination thereof. The computer-readable signal medium may alternatively be any computer-readable medium other than a computer-readable storage medium, and the computer-readable medium may send, propagate, or transmit a program used by or in combination with an instruction execution system, apparatus, or device. The computer program included in the computer-readable medium may be transmitted by using any proper medium, including but not limited to a wireless medium or a wired medium, or any proper combination thereof.

The flowcharts and block diagrams in the accompanying drawings show system architectures, functions, and operations that may be implemented by systems, methods, and computer program products according to various embodiments of this application. Each block in the flowcharts or block diagrams may represent a module, a program segment, or a part of code, and the module, the program segment, or the part of code includes one or more executable instructions for implementing a specified logical function. It should also be noted that, in some alternative implementations, a function marked in the block may also occur in a sequence different from that marked in the accompanying drawings. For example, two consecutively represented blocks may be actually executed substantially in parallel, and may sometimes be executed in a reverse order, depending on a function involved. It should also be noted that each block in the block diagrams or the flowcharts and a combination of blocks in the block diagrams or the flowcharts may be implemented by using a dedicated hardware-based system designed to perform a specified function or operation, or may be implemented by using a combination of dedicated hardware and computer instructions.

In the corresponding drawings of the foregoing embodiments, a connection line may represent a connection relationship between various components to indicate that more of constituent_signal paths (constituent_signal path) and/or one or more ends of some lines have arrows to indicate main information flow directions. The connection line serves as an identification, not a limitation on the solution, to facilitate easier connection of a circuit or logical unit in combination with one or more example embodiments. Any signal represented (determined by design requirements or preferences) may actually include one or more signals that may be transmitted in any direction and may be implemented in any suitable type of signal solution.

The units involved in the embodiments of this application may be implemented by using software, or may be implemented by using hardware, and the units described may also be disposed in a processor. Names of these units do not constitute a limitation on the units in a specified case.

Another aspect of this application further provides a computer-readable storage medium, where a computer program is stored on the computer-readable storage medium, and the computer program is executed by a processor to implement the foregoing method. The computer-readable storage medium may be included in the electronic device described in the foregoing embodiment, or may exist separately, and is not assembled into the electronic device.

**It** should be noted that although several modules or units of the device for performing the action are mentioned in the foregoing detailed descriptions, such division is not mandatory. Actually, according to implementations of this application, features and functions of the two or more modules or units described above may be embodied in one module or unit. On the contrary, features and functions of one module or unit described above may alternatively be embodied in a plurality of modules or units.

**A** person skilled in the art may readily understand the foregoing descriptions of the implementations. The example implementations described herein may be implemented by software, or may be implemented by software in combination with necessary hardware. Therefore, the technical solutions according to the implementations of this application may be embodied in a form of a software product. The software product may be stored in a nonvolatile storage medium (which may be a CD-ROM, a USB flash drive, or a removable hard disk) or a network, and includes several instructions, so that a computing device (which may be a personal computer, a server, a touch terminal, or a network device) performs the method according to the implementations of this application.

It should be noted that this application may be applied to numerous general or dedicated computing system environments or configurations, for example, a personal computer, a server computer, a handheld device or a portable device, a flat panel device, a multi-processor system, a microprocessor-based system, a top box, a programmable consumer electronic device, a network PC, a small computer, a large computer, and a distributed computing environment that includes any of the foregoing systems or devices.

A person skilled in the art may easily figure out another implementation solution of this application after considering this specification and practicing the implementations disclosed herein. This application aims to cover any variation, usage, or adaptive change of this application. These variation, usage, or adaptive change follows a general principle of this application, and include common knowledge or conventional technical means in the art that are not disclosed in this application.

It should be understood that the foregoing content is merely example embodiments of this application, and is not intended to limit the implementation solutions of this application. A person of ordinary skill in the art can easily make corresponding adaptations or modifications according to a main concept of this application. Therefore, the scope of protection of this application should be defined by the claims as set forth.

## Claims

1. A battery data processing method, comprising:
obtaining an initial state parameter of a target vehicle battery, a vehicle state parameter, and a data processing module type that are collected by a data collection module, and sending the initial state parameter, the vehicle state parameter, and the data processing module type to a data management module;
determining, by the data management module, a target state parameter based on the initial state parameter, and generating a target battery parameter set based on the target state parameter, the initial state parameter, and the vehicle state parameter;
determining a data transmission manner based on the data processing module type, and sending the target battery parameter set to a data processing module based on the data transmission manner; and
determining, by the data processing module, a to-be-managed state parameter based on a preset calculation model and the target battery parameter set to process battery data.

2. The battery data processing method according to claim 1, wherein the data processing module type comprises an in-domain data processing module and an outside-domain data processing module, and determining the data transmission manner based on the data processing module type, and sending the target battery parameter set to the data processing module based on the data transmission manner comprises:
if the data processing module type is the in-domain data processing module, determining that the data transmission manner is in-domain bus transmission, and sending the target battery parameter set to the data processing module based on the in-domain bus transmission.

3. The battery data processing method according to claim 1, wherein determining the data transmission manner based on the data processing module type, and sending the target battery parameter set to the data processing module based on the data transmission manner comprises:
if the data processing module type is an outside-domain data processing module, determining that the data transmission manner is wireless transmission, and sending the target battery parameter set to the data processing module based on the wireless transmission.

4. The battery data processing method according to claim 3, wherein if the data processing module type is the outside-domain data processing module, the battery data processing method further comprises:
determining a type of the outside-domain data processing module, wherein the type of the outside-domain data processing module comprises a single-vehicle outside-domain data processing module and a multi-vehicle outside-domain data processing module.

5. The battery data processing method according to claim 4, wherein after the determining the type of the outside-domain data processing module, the battery data processing method further comprises:
if the type of the outside-domain data processing module is the multi-vehicle outside-domain data processing module, obtaining a vehicle identity information parameter of a target vehicle;
annotating the target battery parameter set based on the vehicle identity information parameter, and sending the annotated target battery parameter set to the data processing module based on the data transmission manner; and
determining, by the data processing module based on the preset calculation model and the annotated target battery parameter set, a to-be-managed state parameter with annotation.

6. The battery data processing method according to claim 5, wherein after determining, by the data processing module based on the preset calculation model and the annotated target battery parameter set, the to-be-managed state parameter with annotation, the battery data processing method comprises:
sending the to-be-managed state parameter with annotation to the data management module;
determining, based on the to-be-managed state parameter with annotation, the target vehicle that has a mapping relationship with the to-be-managed state parameter with annotation; and
sending, based on wireless transmission, the to-be-managed state parameter with annotation to a data management module of the target vehicle that has the mapping relationship with the to-be-managed state parameter with annotation.

7. The battery data processing method according to claim 1, wherein after determining, by the data processing module, the to-be-managed state parameter based on the preset calculation model and the target battery parameter set, the battery data processing method further comprises:
determining a current battery management policy through matching in a preset battery management policy set based on the target battery parameter set and the to-be-managed state parameter, to manage the battery according to the current battery management policy.

8. The battery data processing method according to claim 1, wherein the target state parameter comprises at least an initial remaining power parameter and an initial battery charging capacity parameter, and after obtaining the initial state parameter of the target vehicle battery, the vehicle state parameter, and the data processing module type that are collected by the data collection module, and sending the initial state parameter, the vehicle state parameter, and the data processing module type to the data management module, the battery data processing method further comprises:
if the target state parameter is the initial remaining power parameter, determining, by the data management module, the initial remaining power parameter based on the initial state parameter, and generating a remaining power parameter set based on the initial remaining power parameter, the initial state parameter, and the vehicle state parameter;
determining the data transmission manner based on the data processing module type, and sending the remaining power parameter set to the data processing module based on the data transmission manner;
determining, by the data processing module, a to-be-managed remaining power parameter based on the preset calculation model and the remaining power parameter set; and
sending the to-be-managed remaining power parameter to the data management module, and obtaining a current state parameter of an in-vehicle battery at a data receiving moment, to correct the to-be-managed remaining power parameter based on the initial remaining power parameter and the current state parameter, wherein the data receiving moment is a moment at which the to-be-managed remaining power parameter is received by the data management module.

9. The battery data processing method according to claim 8, wherein correcting the to-be-managed remaining power parameter based on the initial remaining power parameter and the current state parameter comprises:
determining a current remaining power parameter based on the current state parameter, and determining a remaining power parameter deviation based on the initial remaining power parameter and the current remaining power parameter; and
correcting the to-be-managed remaining power parameter based on the remaining power parameter deviation to obtain an optimized to-be-managed remaining power parameter.

10. The battery data processing method according to claim 9, wherein sending the to-be-managed remaining power parameter to the data management module comprises:
if the data management module is a multi-vehicle outside-domain data processing module, determining, based on the to-be-managed remaining power parameter with annotation, a target vehicle that has a mapping relationship with the to-be-managed remaining power parameter with annotation; and
sending, based on wireless transmission, the to-be-managed remaining power parameter with annotation to a data management module of the target vehicle that has a mapping relationship with the to-be-managed remaining power parameter with annotation.

11. The battery data processing method according to any one of claims 1 to 10, wherein after obtaining the initial state parameter of the target vehicle battery, the vehicle state parameter, and the data processing module type that are collected by the data collection module, and sending the initial state parameter, the vehicle state parameter, and the data processing module type to the data management module, the battery data processing method further comprises:
if the target state parameter is an initial battery charging capacity parameter, determining, by the data management module, the initial battery charging capacity parameter based on the initial state parameter, and generating a charging capacity parameter set based on the initial battery charging capacity parameter and the initial state parameter;
determining a data transmission manner based on the data processing module type, and sending the charging capacity parameter set to the data processing module based on the data transmission manner;
determining, by the data processing module, a to-be-managed battery charging capacity parameter based on the preset calculation model and the charging capacity parameter set; and
determining a current charging management policy through matching in a preset charging management policy set based on the second battery parameter set and the to-be-managed battery charging capacity parameter, to manage a charging current according to the current charging management policy.

12. A battery data processing apparatus, wherein the battery data processing apparatus comprises:
a data collection module, configured to: obtain an initial state parameter of a target vehicle battery, a vehicle state parameter, and a data processing module type that are collected by a data collection module, and send the initial state parameter, the vehicle state parameter, and the data processing module type to a data management module;
the data management module, configured to: determine a target state parameter based on the initial state parameter, and generate a target battery parameter set based on the target state parameter, the initial state parameter, and the vehicle state parameter;
a data transmission module, configured to: determine a data transmission manner based on the data processing module type, and send the target battery parameter set to a data processing module based on the data transmission manner; and
a data processing module, configured to determine a to-be-managed state parameter based on a preset calculation model and the target battery parameter set to process battery data.

13. An electronic device, comprising:
one or more processors; and
a storage apparatus, configured to store one or more programs, wherein when the one or more programs are executed by the one or more processors, the electronic device is enabled to implement the battery data processing method according to any one of claims 1 to 11.

14. A computer-readable storage medium, wherein computer-readable instructions are stored on the computer-readable storage medium, and when the computer-readable instructions are executed by a processor of a computer, the computer is enabled to execute the battery data processing method according to any one of claims 1 to 11.
